Europäisches Patentamt

European Patent Office

Office européen des brevets

(19)

(11) Publication number: **0 159 826**
**A1**

# EUROPEAN PATENT APPLICATION

(12)

(21) Application number: **85302123.6**

(22) Date of filing: **27.03.85**

(51) Int. Cl.⁴: **A 22 B 5/20, A 22 C 17/04**

---

(30) Priority: **28.03.84 GB 8407997**

(43) Date of publication of application: **30.10.85**
**Bulletin 85/44**

(84) Designated Contracting States: **AT BE CH DE FR GB IT LI LU NL SE**

(71) Applicant: **Ernest A. Bitterling Limited, 179 Gladstone Street, Nottingham NG7 6HX (GB)**

(72) Inventor: **Adams, Barry John, 5 Old Road, Ruddington Nottinghamshire (GB)**
Inventor: **Robinson, Kenneth, 1 Tamblyn Close, Arnold Nottinghamshire (GB)**

(74) Representative: **Dealtry, Brian, Eric Potter & Clarkson 14, Oxford Street, Nottingham NG1 5BP (GB)**

---

(54) **Method and apparatus for removing meat from bone.**

(57) Apparatus for assisting in removal of meat from a rib cage, the apparatus including support means (12) for engaging and supporting the rib cage, and gripping means (16) for gripping a marginal portion of meat, the support means and gripping means being movable relative to one another between a first position whereat they are in proximity to one another and a second position whereat they are further spaced from one another.

- 1 -

## Method and Apparatus for Removing Meat from Bone

The present invention relates to a method and apparatus for removing meat from bone, in particular the present invention is concerned with the removal of meat from the forequarters of a slaughtered animal.

The forequarter of say a bull can be fairly heavy and it is conventional to remove meat from the rib cage by a butcher using a knife. This operation is very tiring as it requires a great deal of strength and is a skillful operation. This operation is therefore labour intensive and slow which is highly undesirable for companies requiring large quantities of meat such as processed food manufacturers.

The primary object of the present invention is to provide an apparatus for assisting in removal of meat from the rib cage of a forequarter which does not necessarily require the skills of a qualified butcher and which is quicker and less demanding on labour than conventional methods.

According to one aspect of the present invention, there is provided apparatus for assisting in removal of meat from a rib cage, the apparatus including support means for engaging and supporting the rib cage, and gripping means for gripping a marginal portion of meat, the support means and gripping means being movable relative to one another between a first position whereat they are in proximity to one another and a second position whereat they are further spaced from one another.

According to another aspect of the present invention there is provided a method of removing meat from a rib cage including supporting the rib cage on a support, separating a marginal portion of meat to create a flap of meat, gripping said flap with gripping means, moving the support and gripping means away from one another to tension the meat and pull it in a direction away from the rib cage and when necessary slicing the meat to remove it from the rib cage.

Various aspects of the present invention are hereinafter described with reference to the accompanying drawings, in which:-

Figure 1 is a perspective view from the front showing the apparatus according to the present invention;

Figure 2 is an end view of part of the apparatus showing in particular one pair of gripping jaws;

Figure 3 is a sectional view along line III-III in Figure 2;

Figure 4 to 6 are diagrammatic side view of the apparatus shown in Figure 1 at various stages in the process of removing meat from a rib cage.

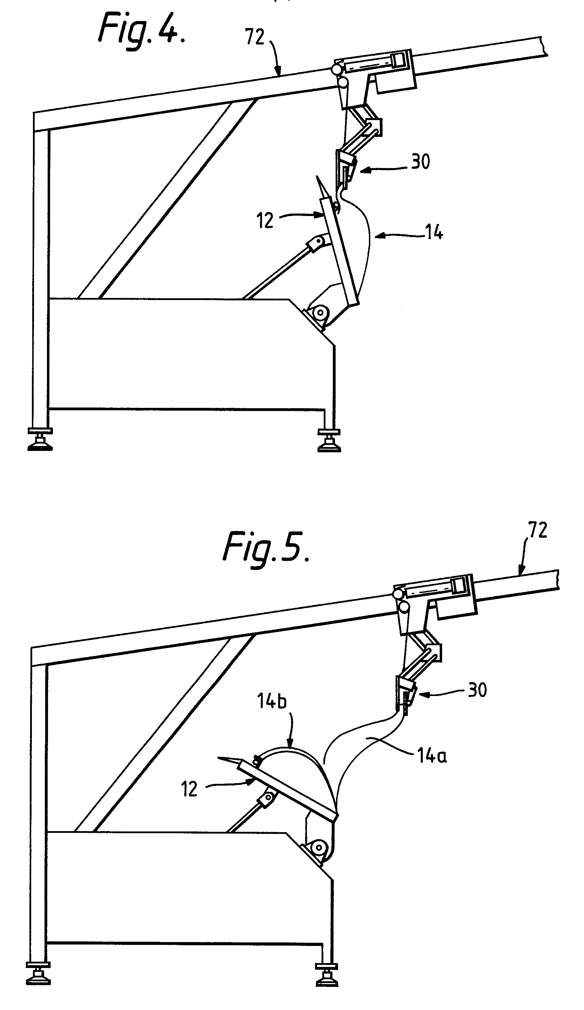

The apparatus according to the present invention is generally shown at 10, and includes a support in the form of a movable table 12 having a series of hooks 15 on which a forequarter 14 is suspended (Figures 4 to 6) and gripping means 16 which is mounted above the table and is intended to grip the meat.

The table is pivotally mounted in the main frame 20 of the apparatus and is movable from an upright position (as seen in Figure 4) whereat it is substantially vertical to a lower position whereat it approaches a horizontal position as shown in Figure 6. The table is moved between its upright and lower positions by means of a pneumatic ram 25.

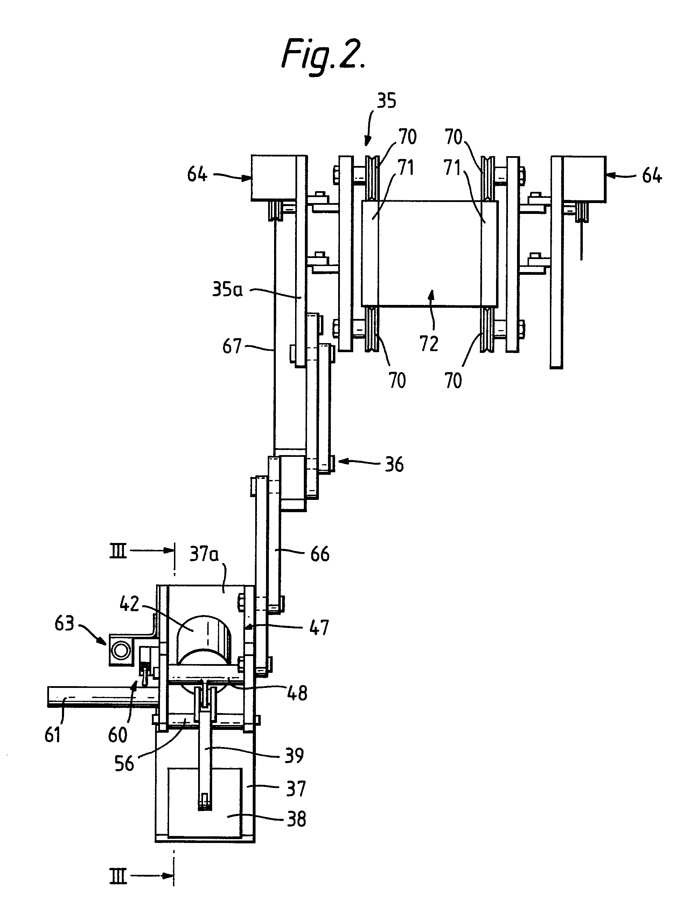

In the illustrated embodiment, the gripping means 16 comprises two gripping assemblies 30 each of which is independently suspended from a carriage 35 via a parallel linkage 36. Each gripping assembly 30 is of the same construction and for the sake of clarity only one assembly is illustrated in Figure 2.

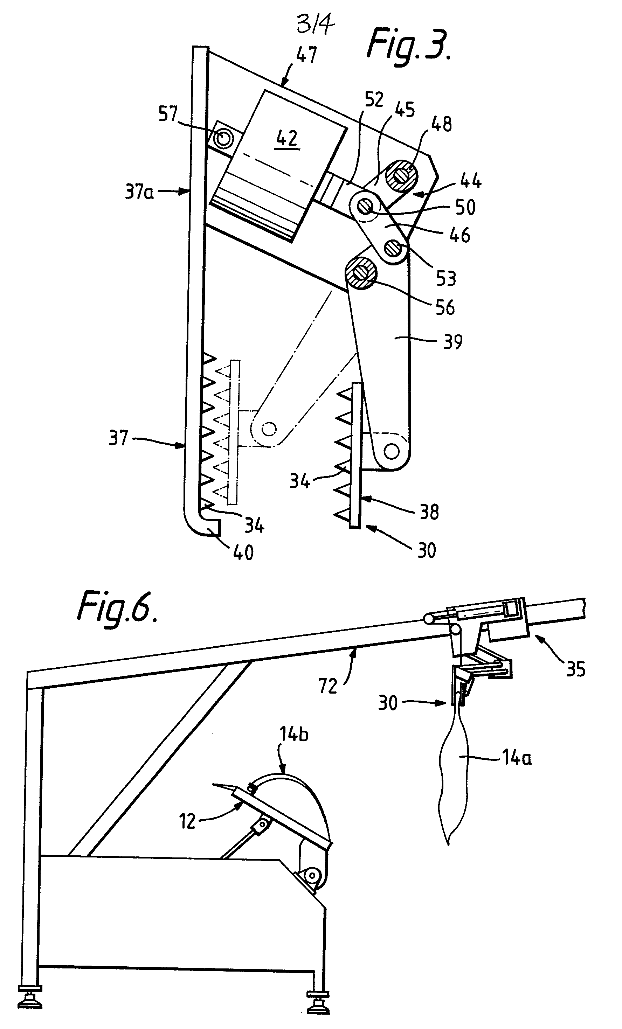

Each assembly 30 includes a pair of gripping jaws 37,38 which are movable between meat gripping and release positions. The meat gripping position is illustrated in Figure 3 by broken lines and the release position is illustrated in Figure 3 by full lines.

Preferably jaw 37 is stationary and jaw 38 is movable. Jaw 38 is pivotally attached to an arm 39 so that in use it may pivot relative to jaw 37 to maintain substantial parallelism with jaw 37. Preferably, opposing faces of jaw 37,38 are both provided with spikes 34 for penetrating meat located between the jaws for attaining a positive grip. Additionally, the jaw 37 is preferably provided with a lower projecting flange 40 around which meat is folded to enhance the gripping effect of the jaws.

Jaw 37 is moved by a double acting pneumatic ram 42 which is operatively connected to arm 39 via a toggle-like linkage 44 comprising a pair of pivotally connected arms 45 and 46.

Jaw 37 has an upward extension 37a on which a bracket 47 is secured. Arm 45 is secured at one end to a shaft 48 which is rotatably supported in the bracket 42. The opposite end of arm 45 is pivotally connected via a pin 50 to the piston rod 52 of ram 42 and to one end of arm 46. The opposite end of arm 46 is pivotally connected to arm 39 via a pin 53. Arm 39 is mounted on a shaft 56 which is rotatably supported in bracket 47. The ram 42 is pivotally supported in the bracket 47 via a shaft 57. The positions of the pivotal connections i.e. defined by the axes of shaft 48, pin 50, pin 53 and shaft 56 are chosen so that when the jaws are in

- 4 -

their gripping position, forces exerted on jaw 38 for moving it away from jaw 37 tend to move pin 50 in the advance direction of the piston 52. Since piston 52 will be residing in its fully extended position this movement is resisted and it will be appreciated therefore that the jaws are effectively locked in their gripping positions until piston 52 is retracted.

Operation of ram 42 for opening and closing of jaws 37,38 is conveniently achieved via a switch 60. A handle 61 is provided to enable an aperture to position jaws 37,38 prior to closing.

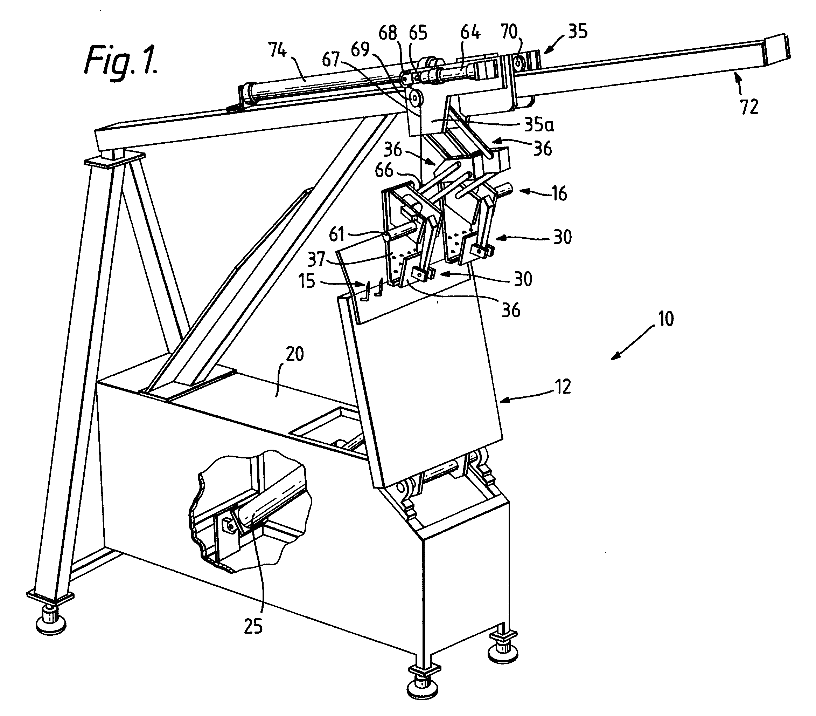

The jaws 37,38 are raisable from the position shown in Figure 1, by means of a pneumatic ram 64 the piston 65 of which is attached to a lower linkage 66 via a cord 67 which is trained about pulleys 68,69. When the piston 65 is extended, the effective length of the cord is shortened and the lower linkage arm 66 is raised. The uppermost position of the jaws 37,38 is illustrated in Figure 6.

When the jaws 37,38 are located adjacent the table and are in their raised position free access is permitted to the table to enable an operative to load a forequarter 14 onto the hooks 15. Preferably a switch 63 (Figure 2) is provided adjacent handle 61 to operate ram 64 to lower the jaws 37,38 under the control of the operative.

Each ram 64 and associated parallel linkage are mounted on a support plate 35a hingedly attached to the remainder of the carriage 35. Accordingly the spacing between the grip assemblies 30 may be adjusted. The carriage 35 is provided with wheels 70 which run along rails 71 attached to an overhead beam 72.

Movement of carriage 35 along the beam 72 is achieved via a pneumatic ram 74. Preferably trip switches are provided (not shown) along rails 71 for operating rams to raise the jaws 37,38 as the carriage 35 is moved away from the table.

The preferred sequence of operation is illustrated in Figures 4 to 6. Initially, the table 12 is located in its upright position and the two grip assemblies are in their raised position. An operative loads a rib cage and meat onto the table so that the rib cage is engaged by and suspended from hooks 15. The operative then slices a marginal portion of meat to create a flap 80 (shown in Figure 4) and then lowers the gripping assemblies to engage the flap 80. This situation is illustrated in Figure 4. The operative then activates a switch (not shown) which operates pneumatic rams 25 and 74 to simultaneously lower table 12 and move carriage 35 along rails 71. The meat 14a and rib cage 14b are thereby moved apart and the operative slices the meat where necessary to ensure separation of the meat from the rib cage (see Figure 5). When separation is complete, the meat 14a is carried by the grip assemblies 30 and is lifted thereby by actuation of rams 64 as the carriage advances along the rails 71 (see Figure 6). This gives greater ground clearance and enables the meat to be deposited on a table or conveyor (not shown). After removal of the meat and rib cage the table 12 and carriage 35 are returned to their original position.

It is envisaged that during the meat/rib cage separation process the gripping means 16 may remain stationary as the table 12 moves or vica versa.

It is also envisaged that each gripping assembly 30 may be supported from the carriage 35 by a pair of parallel linkages 36. In such a case a separate parallel linkage would be provided on the opposite side of a gripping assembly 30 so that gripping assembly 30 would be positioned between the pair of linkages.

- 6 -

CLAIMS

1.    Apparatus for assisting in removal of meat from a rib cage, the apparatus including support means for engaging and supporting the rib cage, and gripping means for gripping a marginal portion of meat, the support means and gripping means being movable relative to one another between a first position whereat they are in proximity to one another and a second position whereat they are further spaced from one another.

2.    Apparatus according to Claim 1 wherein the support means comprises a table having protruding hook formations onto which the rib cage may be hung.

3.    Apparatus according to Claim 2 wherein the table is pivotally mounted for movement between an upright loading position and a lower position.

4.    Apparatus according to Claim 1, 2 or 3 wherein the gripping means comprises at least one pair of jaws movable between gripping and release positions and being mounted above the support means.

5.    Apparatus according to Claim 4 wherein the at least one pair of jaws is movably mounted on a frame for movement away from the support means.

6.    Apparatus according to Claim 4 or 5 wherein the at least one pair of jaws is mounted so as to be movable between a raised position and a lowered position, the jaws in the raised position permitting free access to the support means for loading a rib cage thereon, and the jaws in the lower position being capable of gripping the marginal portion of meat.

7.    Apparatus for assisting in the removal of meat from a rib cage substantially as described with reference to and as illustrated in any of the accompanying drawings.

8.    A method of removing meat from a rib cage

0159826

- 7 -

including supporting the rib cage on a support, separating a marginal portion of meat to create a flap of meating, gripping said flap with gripping means, moving the support and gripping means away from one another to tension the meat and pull it in a direction away from the rib cage and when necessary slicing the meat to remove it from the rib cage.

Fig.1.

## Fig.2.

0159826

**Fig. 3.**

47

57

52  45  48

42

37a

44

50

46

53

56

39

37

34

34

38

40

30

**Fig. 6.**

72

35

30

14b

14a

12

0159826

**Fig.4.**

72

30

12

14

**Fig.5.**

72

30

14b

14a

12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 428 979 (KORHONEN)<br><br>* Page 7, lines 1-36; figure 7 * | 1,4-6, 8 | A 22 B 5/20<br>A 22 C 17/04 |
| X | US-A-3 220 051 (FILL)<br>* Column 2, line 31 - column 5, line 18 * | 1,4-6 | |
| A | DE-A-3 204 448 (TESCHKE)<br>* Claims 1,16 * | 3 | |
| A | US-A-1 631 827 (LANTAGNE)<br>* Whole document * | 2 | |
| A | US-A-2 031 307 (GLOEKLER)<br>* Whole document * | 2,3 | |
| A | FR-A-2 452 253 (TOURNIER) | | TECHNICAL FIELDS SEARCHED (Int. Cl.4) |
| A | US-A-4 164 056 (HILGNER) | | A 22 C<br>A 22 B |

The present search report has been drawn up for all claims

| Place of search | Date of completion of the search | Examiner |
|---|---|---|
| THE HAGUE | 26-06-1985 | DE LAMEILLIEURE D. |